# EUROPEAN PATENT SPECIFICATION

(11) **EP 0 332 126 B1**
(45) Date of publication and mention of the grant of the patent: **29.06.1994**
(21) Application number: 89103957.0
(22) Date of filing: 07.03.1989
(51) Int. Cl.: B62D 1/16, B62D 25/08

(54) **Steering assembly supporting construction of a motor vehicle**
Lenkvorrichtungs-Tragkonstruktion eines Kraftfahrzeuges
Support d'un ensemble de direction d'un véhicule automobile

(30) Priority: 08.03.1988 JP 54001/88; 14.03.1988 JP 60964/88
(43) Date of publication of application: 13.09.1989
(73) Proprietor: Mazda Motor Corporation, Aki-gun Hiroshima-ken (JP)
(72) Inventor: Tadashi, Ioka, Aki-gun, Hiroshima-ken, (JP); Katsumi, Sakane, Aki-gun, Hiroshima-ken (JP); Toshifumi, Suzuki, Aki-gun, Hiroshima-ken, (JP); Kazunari, Amatsu, Aki-gun, Hiroshima-ken (JP); Kaoru, Shimada, Aki-gun, Hiroshima-ken (JP)
(74) Representative: Lange, Gerd, Dipl.-Ing.

(56) References cited:
- EP-A- 0 256 273
- DE-A- 2 407 932
- DE-A- 2 457 498
- DE-A- 3 544 345
- DE-A- 3 723 376
- FR-A- 2 170 750
- US-A- 4 413 702
- PATENT ABSTRACTS OF JAPAN, vol. 11, no. 380 (M-650)[2827], 11th December 1987;& JP-A-62 149 554 (MAZDA MOTOR CORP.) 03-07-1987&& US-A-4 738 469 (USHIJIMA) (19-04-1988)(Org. 1)

## Description

### BACKGROUND OF THE INVENTION

### (Field of the Invention)

This invention relates to a steering assembly supporing construction for fitting a steering device of a motor vehicle to a car body in accordance with the introductary part of claim 1.

### (Description of prior art)

A steering assembly supporting construction of the before-mentioned kind is known from JP-A-62-149554. According to this steering support mechanism the lower end of the steering column is coupled to one end of a link member having the other end coupled to the steering bracket to secure it to the car body.

When an impact load on the car body exceeds a given value, the lower end part of the steering column is released from coupling with the link member. The releasing action does, however, take place to late after the beginning of a head-on crash, so that the engine contacts the gear box at the lower end of the steering column restricting the upward movement of the same.

DE-A-2407932 discloses that the support of the steering shaft is released when the sensor detects a collision. In response to this releasing the steering shaft wholly rotates downwardly, or only the steering wheel carries out a downward movement.

Generally, the steering assembly supporting construction of a motor vehicle, a steering shaft which transmits truning force of a steering handle to a gear box is supported rotatably by a steering column which is arranged in upwardly sloped state, with its upper and lower portions fitted to a member on the car body side (dash panel, for example) via a bracket. (Refer to U.S. Patent No. 4,362,319 and Japanese Utility Model Registration Application Laying Open Gazette No. 58-111668).

Various standards have been established for motor vehicles, one of which provides for the quantity of movement of a steering wheel toward the rear side of a driver's compartment at a collision (hereinafter referred to as "quantity of rearward movement of a steering wheel"). The quantity of rearward movement of a steering wheel is generally regarded as corresponding to the distance of horizontal movement of a steering wheel toward the rear side of a driver's compartment caused by retreatment of auxiliary machine members, such as an engine, in an engine room at the front of a car body toward the driver's compartment side at a head-on collision, for example.

In order to suppress such a quantity of rearward movement of a steering wheel, it is known to provide a supporting member which connects a lower art of a steering column to a member on the car body side in such a fashion that the connected state of the steering column can be released so as to move the steering wheel upwardly at a collision by rotating the steering column around a supporting point supported to the car body by releasing the predetermined connected state of the steering column (refer to Japanese Utility Model Registration Application Laying Open Gazette No.62-117169).

However, the release of the connected state of the steering column in the supporting member is so composed that it is done by movement of the dash panel which is a car body side member of the connecting member toward the driver's compartment side at a collision. The movement of the dash panel toward the driver's compartment at a collision takes place at a fairly later stage of the collision and therefore, the dash panel will in some cases move as it is deformed complicatedely. In such cases, the release of the steering column cannot be done as desired.

It is so desired that by the rotation of the steering column, the steering wheel is moved upwardly but it has been demanded to control the quantity of upward movement of the steering wheel so as to improve safety at a collision. In this connection, suppose a driver bumps his head against the steering wheel at a collision, it is desirable in the ordinary motor vehicle to enlarge the quantity of upward movement of the steering wheel with the rotation of the steering column so that his head strikes against a handle part of ring shape which is lower in rigidity than a boss part (central part) of the steering wheel. On the other hand, in the motor vehicle having an airbag device, for example, at a boss part of a steering wheel, it is necessary to lessen the quantity of upward movement of the steering wheel with the rotation of the steering column. Control on the quantity of upward movement of the steering wheel can be done by adjusting the timing of releasing the connected state of the steering column in the supporting member.

### SUMMARY OF THE INVENTION

An object of the present invention is to improve safety at a collision by releasing timely and positively the connected state of the steering column by the supporting member so as to restrict the quantity of the rearward movement of the steering wheel and also control properly the quantity of upward movement of the steering wheel.

In order to attain the above object, the construction according to the present invention comprises releasing means which detects a predetermined state of collision at a car crash and initiates release of the second steering column supporting member before the gear box at the lower end of the steering column is affected by the collision.

Under the above construction, at the time of collision of motor vehicles, by the releasing means which detected the predetermined state of collision, the connected state of the steering column by the second steering column supporting member which supports the lower part of the steering column is released compulsorily and accurately and the steering column rotates, with the first steering column supporting member which supports the upper part of the steering column as a fulcrum. Thus, the quantity of rearward movement of the steering wheel can be restricted as much as possible and accurately. Since the timing of releasing the connected state by the releasing means can be set at an optional collision state at a collision, the quantity of upward movement of the steering wheel by the rotation of the steering column can be adjusted properly and safely can be improved.

The above and other objects, features and advantages of the present invention will become apparent by reading the following description of preferred embodiments, with reference to the accompanying drawings.

### BRIEF DESCRIPTION OF THE DRAWINGS

The accompanying drawings show preferred embodiments of the present invention, in which:

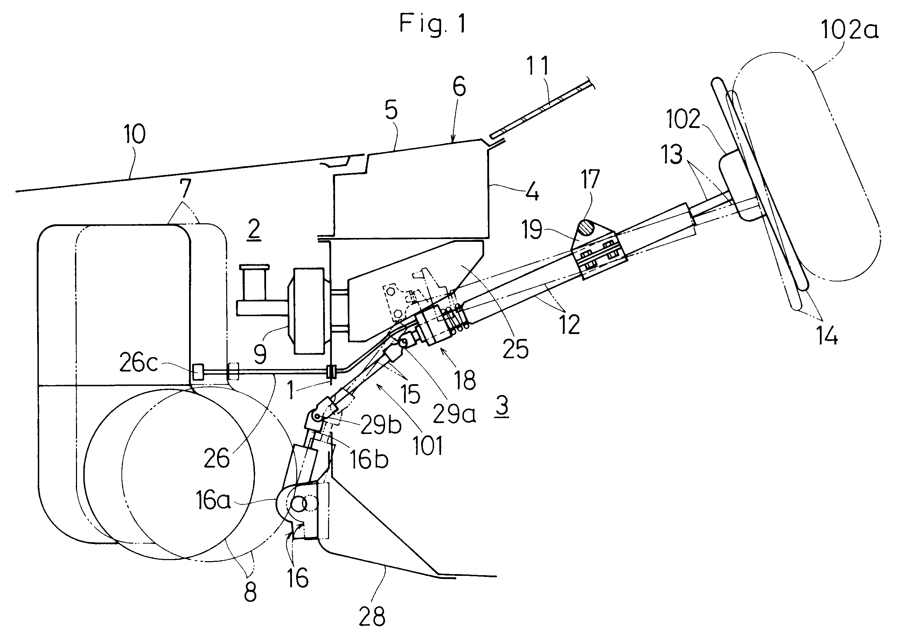

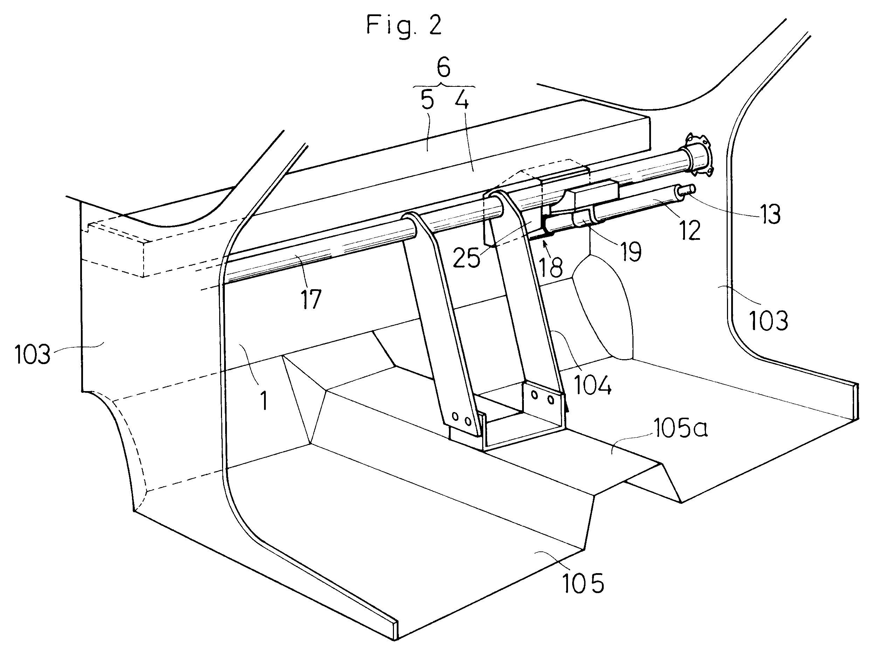

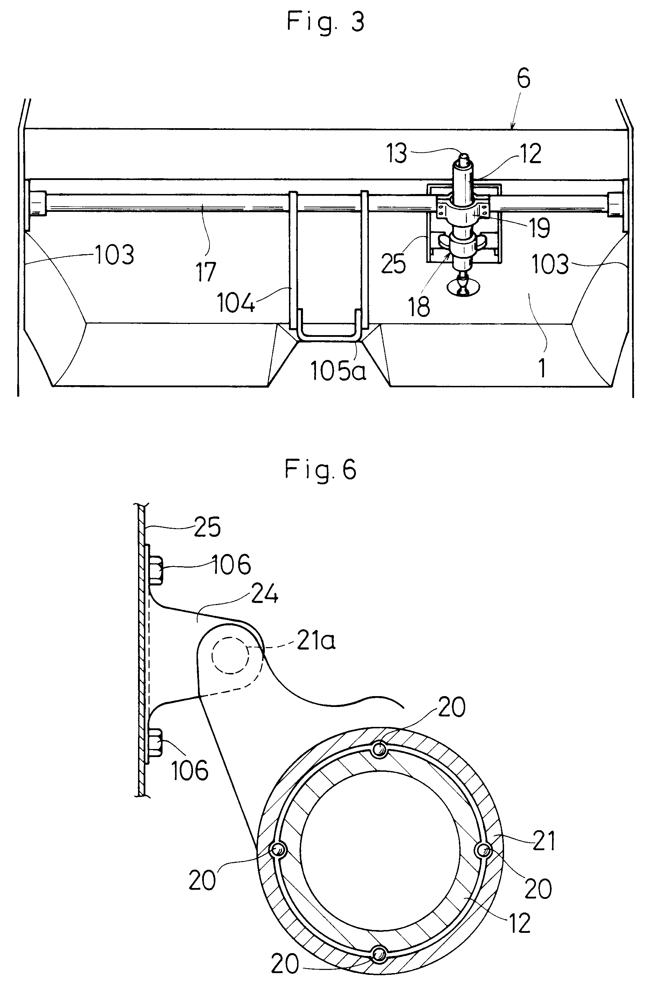

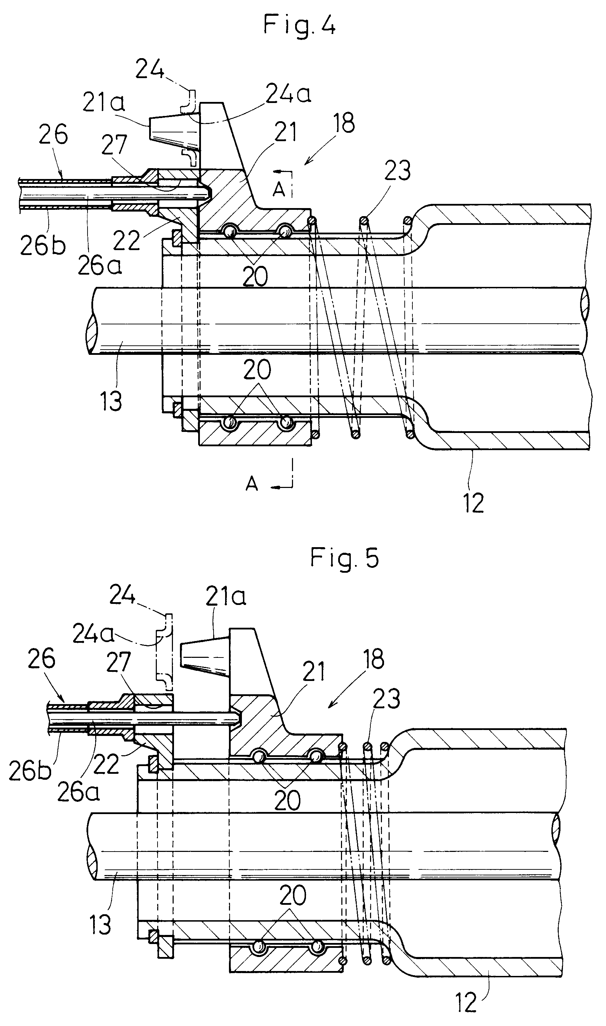

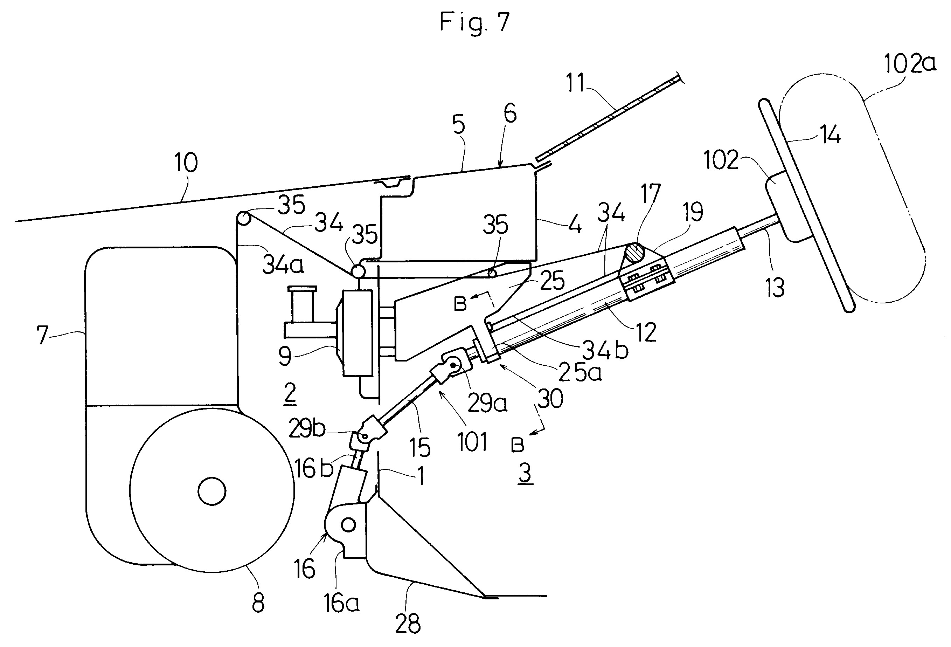

Fig.1 to Fig.6 show respectively a first embodiment of the present invention, of which Fig.1 is a rough cross section, showing the steering assembly supporting construction of a motor vehicle; Fig.2 is a perspective view of the construction shown if Fig.1; Fig.3 is a front view, as seen from the rear of the driver's compartment; Fig.4 and Fig.5 are side views in longitudinal section, showing the composition of the second steering column supporting member, of which Fig.4 shows the connected state of the steering column and Fig.5 shows the state of the steering column as its connected state was released; Fig.6 is a cross section, taken along the line A-A in Fig.4;

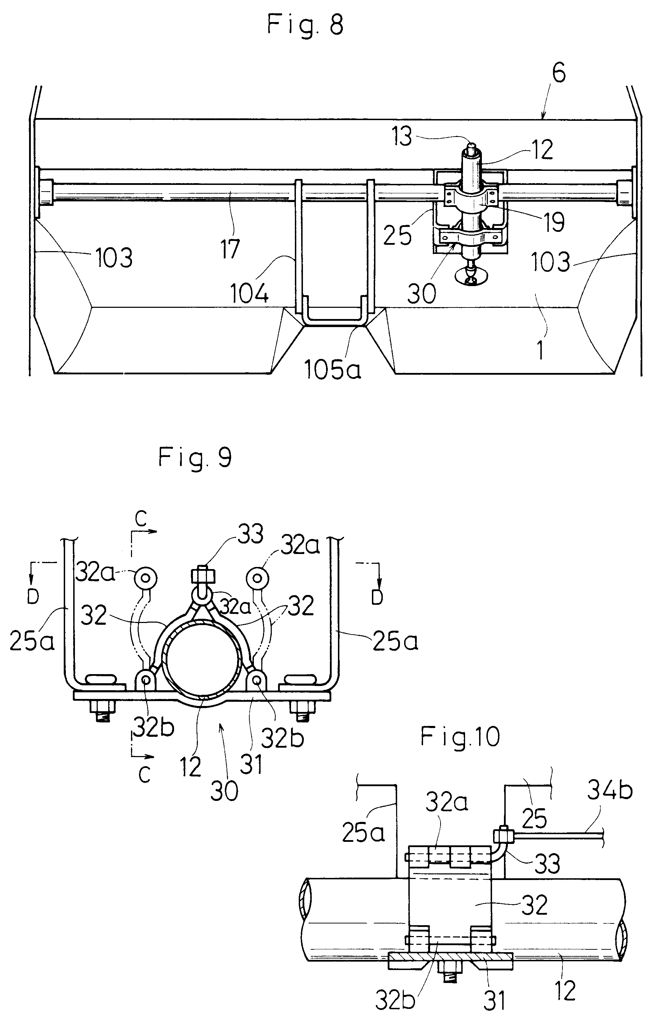

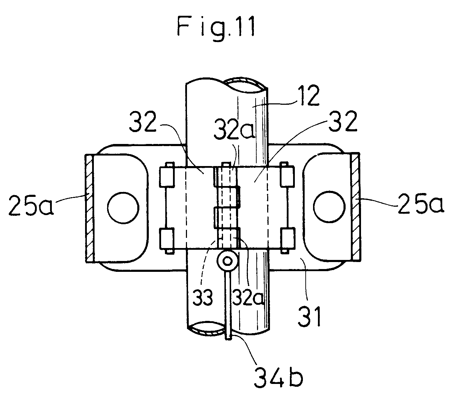

Fig.7 to Fig.11 show respectively a second embodiment of the present invention, in which Fig.7 corresponds to Fig.1; Fig.8 corresponds to Fig.3; Fig.9 is a cross section, on an enlarged scale, taken along the line B-B in Fig.7; Fig.10 and Fig.11 show a cross section, taken along the line C-C and the line D-D respectively in Fin.9;

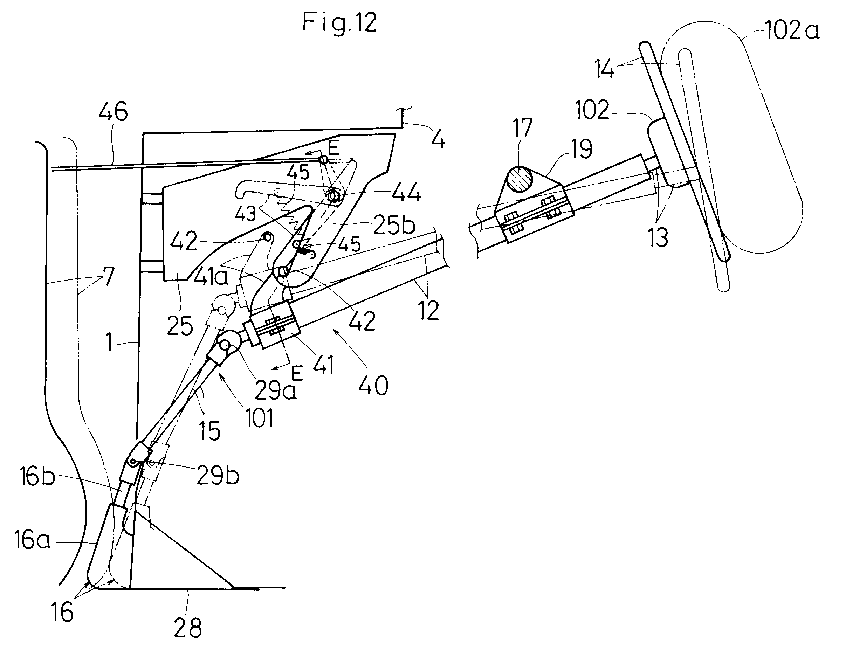

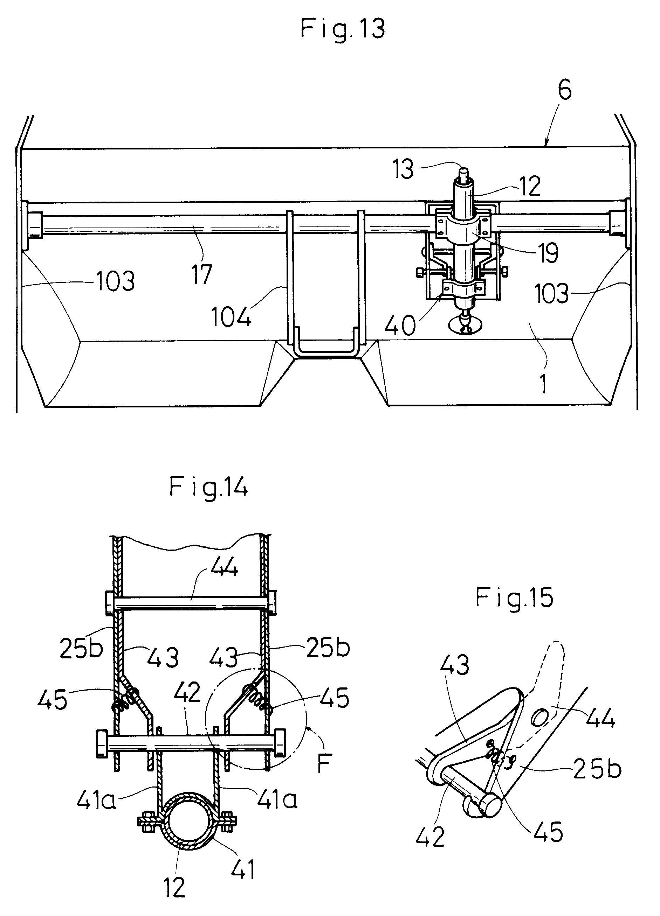

Fig.12 to Fig.15 show respectively a third embodiment of the present invention, in which Fig.12 corresponds to Fig.1; Fig.13 corresponds to Fig.3; Fig.14 is a cross section, taken along the line E-E in Fig.12; Fig.15 is a perspective view of F part in Fig.14;

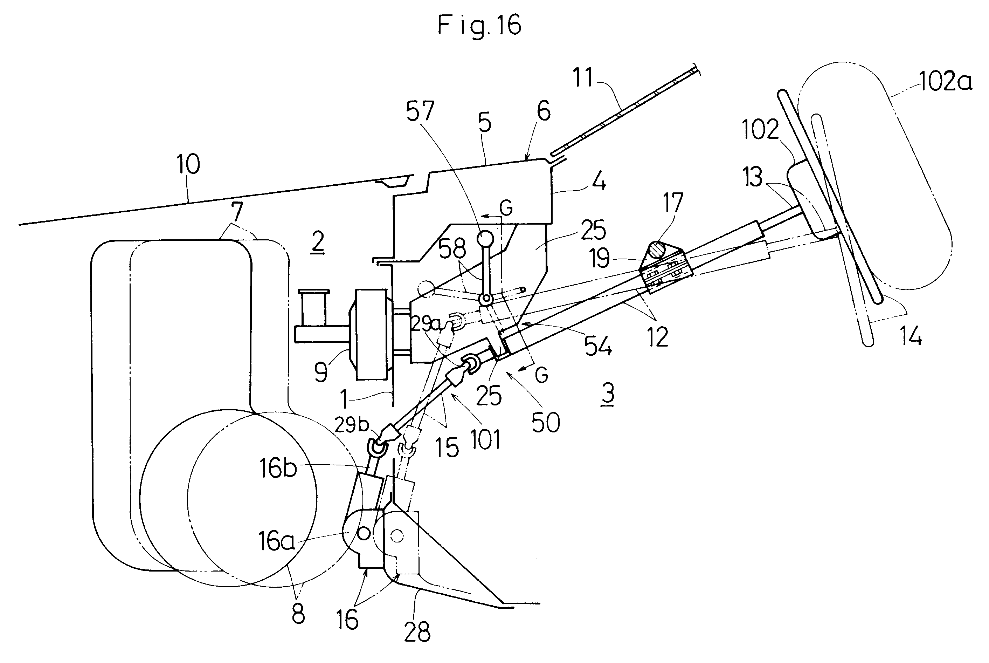

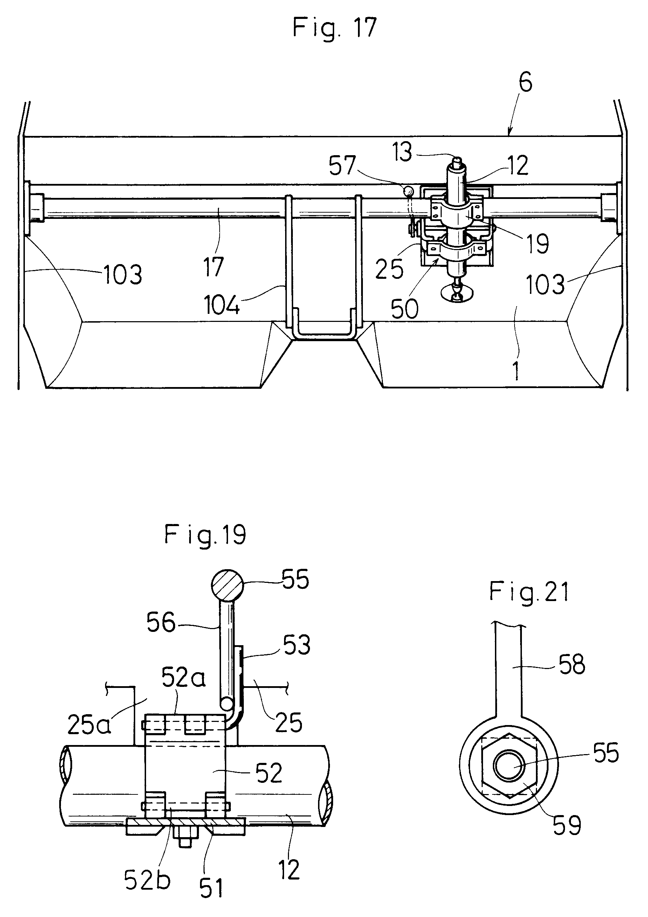

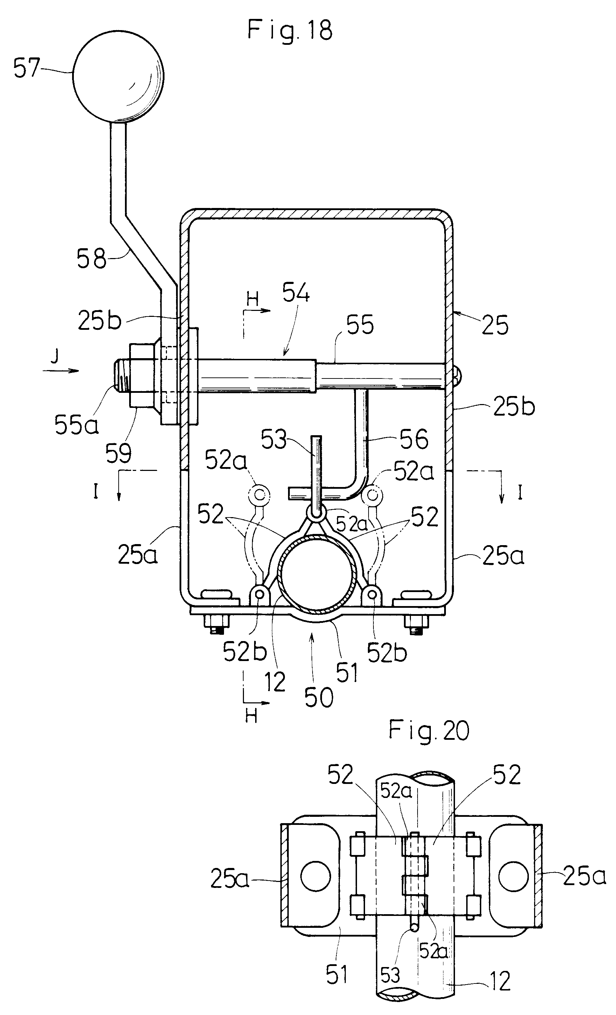

Fig.16 to Fig.21 show respectively a fourth embodiment of the present invention, in which Fig.16 corresponds to Fig.1; Fig.17 corresponds to Fig.3; Fig.18 is a cross section, on an enlarged scale, taken along the line G-G in Fig.16; Fig.19 and Fig.20 are cross sections, taken along the line H-H and the line I-I respectively in Fig.2; and Fig.21 is a perspective view, as seen from the J arrow direction in Fig.18.

### DESCRIPTION OF PREFERRED EMBODIMENTS

Descriptions are made below of the preferred embodiments of the present invention on the basis of the attached drawings.

Fig.1 to Fig.3 shown a steering assembly supporting construction of a motor vehicle according to a first embodiment of the present invention. Reference numeral 1 designates a dash lower panel which partitions an engine room 2 off a driver's compartment 3. Reference numeral 4 designates a dash upper panel connected to the upper end of the dash lower panel 1. The dash upper panel 4 composes, together with a cowl panel 5 arranged thereabove, a cowl box 6 of closed cross sectional construction which extends in car width direction. Reference numerals 7 and 8 designate respectively an engine and a transmission respectively arranged in the engine room 2. Reference numeral 9 designates a vacuum multiplying device for multiplying the brake pedal treadling force and is fixed to the upper part of the dash lower panel 1. Reference numeral 10 designates a bonnet which opens and shuts the upper part of the engine room 2. Reference numeral 11 designates a front window glass. Reference numeral 12 designates a steering column arranged in upward slope at the front in the driver's compartment 3. A main steering shaft 13 is put through the steering column 12 rotatably. While a steering wheel 14 is fitted to the upper end of the main steering shaft 13, a gear box 16 is connected to the lower end of the main steering shaft 13 via a connecting shaft 15. The gear box 16 carries a gear box proper 16a which is fitted to a reinforcement 28 connected to the lower part of the dash lower panel 1 in such a state that it confronts the engine room 2 and a pinion rod 16b extending upward from the gear box proper 16a. Connected to an upper end of the pinion rod 16b is the connecting shaft 15 and provided at the lower end of the pinion rod 16b is a pinion gear (not shown in the drawing) which engages with a rack which is arranged in the gear box proper 16a in car width direction. The connecting shaft 15 is arranged in such a fashion that it inclines more frontward and more downward than the main steering shaft 13 and passes through the dash lower panel 1. A joint between the main steering shaft 13 and the connecting shaft 15 and a joint between the connecting shaft 15 and the pinion rod 16b of the gear box 16 are pivoted by a universal joint 29a and a universal joint 29b respectively. Turning force of the steering wheel 14 is transmitted to the to the gear box 16 via a steering shaft 101 comprising the main steering shaft 13 and the connecting shaft 15 and is further transmitted to the right and left front wheels via a tie rod or the like (not shown in the drawing), whereby both front wheels are steered right and left. An airbag device 102, for preventing the driver from bumping his head directly against the steering wheel 14 at a collision, is provided at a boss part or a central part of the steering wheel 14 (connecting part to the main steering shaft 13).

The steering column 12 is supported at two portions (upper and lower portions) to the car body side via a first steering column supporting member 17 and a second steering column supporting member 18 respectively. Of these two supporting members 17, 18, the first steering column supporting member 17 supporting the upper part of the steering column comprises a rod-like member extending in car width direction, with its right and left ends connected to the cowl sides 103 and its central part supported to a tunnel part 105a of a car body floor 105. The steering column 12 is supported in hanging down state by the steering column supporting member 17 via a bracket 19.

On the other hand, as shown in Fig.4-Fig.6 the second steering column supporting member 18 which supports the lower part of the steering column 12 is provided with a sliding member 21 mounted slidably in axial direction on an outer circumference of the steering column 12 through the medium of rollers 20, a stopper member 22 which restrains the sliding position of the sliding member 21 to the front side of its axial direction, a spring 23 which presses the sliding member 21 and keeps it in contact with the stopper member 22 and a holding member 24 having a holding hole 24a in which an engaging portion 21a of a sliding member 21 is fitted. The holding member 24 is fastened by a bolt 106 to a pedal bracket 25 for supporting pedals, such as a brake pedal. The pedal bracket 25 is fixed to the dash lower panel 1 and the dash upper panel 4 of the cowl box 6. It is so designed that by fitting the engaging portion 21a of the sliding member 21 in the holding hole 24a of the holding member 24, the second steering column supporting member 18 connects the steering column 12 to the pedal bracket 25 which is a member on the car body side and by releasing the engaging portion 21a from fitting in the holding hole 24a, the connected state of the steering column 12 is released.

In Fig.1, reference numeral 26 designates a link member which is a releasing means for releasing the connected state of the steering column 12 in the steering column supporting member 18. The link member 26 comprising a tube 26b and a core rod 26a (refer to Fig.4 and Fig.5) is arranged in longitudinal direction of a car body, passing through the dash lower panel 1. A front end of the link member 26 is positioned close to the rear side of the engine 7 and has a contact portion 26c. On the other hand, as shown in Fig.4 and Fig.5, a rear end of the link member 26 is connected of the stopper member 22 in the second steering column supporting member 18 and its core rod 26a contacts the sliding member 21 through a hole 27 made in the stopper member 22. When the engine 7 as an auxiliary machine member moves toward the driver's compartment 3 at a car crash, the contact portion 26c at an extreme end of the link member 26 contacts the engine 7 and the link member 26 moves rearwardly, whereby the condition of collision is detected. With the rearward movement of the link member 26, the core rod 26a slides the sliding member 21 in the second steering column supporting member 18 toward the rear side of axial direction of the steering column 12 against the pushing force of the spring 23, whereby fitting of the engaging portion 21a of the sliding member 21 in the holding hole 24a of the holding member 24 is released and in its turn, the connected state of the steering column 12 is released. The release of the connected state of the steering column 12 by the link member 26 is set at the condition of collision prior to the engine 7 and a transmission 8 striking against a vacuum multiplying device 9 or the gear box 16 on the side of the dash lower panel 1, in view of the provision of the airbag device 102 at the steering wheel 14.

An explanation is made below of the action and effect of the above embodiment,

At a head-on collision, for example, when the engine 7 and the transmission 8 moves toward the side of the driver's compartment 3, prior to the engine 7 and the transmission 8 striking against the vacuum multiplying device 9 or the gear box 16 on the dash lower panel 1 side, the link member 26 retreats due to the contacting part 26c contacting the engine 7 by the movement of the engine 7. With the retreatment of the link member 26, its core rod 26a slides the sliding member 21 of the second steering column supporting member 18 toward the side of axial direction of the steering column 12 against the pushing force of the spring 23 and fitting of the engaging portion 21a of the sliding member 21 in the holding hole 24a of the holding member 24 is released and in its turn, the connected state of the steering column 12 and the pedal bracket 35 by the second steering column supporting member 18 is released. Thus, the steering column 12 is put in one-point supported condition, namely, is supported at its upper part only by the first steering column supporting member 17. At this stage, as the pedal bracket 25 has not yet been deformed by the collision, release of the above connected state can be carried out accurately.

When the engine 7 and the transmission 8 move toward the driver's compartment 3 as far as the position shown by a virtual line in Fig.1, the transmission 8 which is at the rear of the engine 7 first strikes against the gear box 16 and the impact is transmitted from the gear box 16 to the side of the main steering shaft 13via the connecting shaft 15. At this time, since the connecting shaft 15 slopes downward from the main steering shaft 13, by the impact transmitted from the connecting shaft 15 the moment acts on the main steering shaft 13 and the steering column 12 (in clockwise direction in the drawing) around the first steering column supporting member 17, whereby the steering wheel 14 moves downwardly. At this time, an airbag device 102 senses the impact transmitted to the main steering shaft 13 and an airbag 102a inflates automatically as shown by a virtual line in Fig.1.

When the engine 7 and the transmission 8 move further toward the driver's compartment 3 side, the engine 7 strikes against the vacuum multiplying device 9 and the impact acts from the vacuum multiplying device 9 on the pedal bracket 25 side, via the dash lower panel 1, as backward impact load. At this time, the pedal bracket 25 moves horizontally toward the rear of the driver's compartment 3 by the backward impact load, but since the steering column 12 is already released from the connection with the pedal bracket 25 by the second steering column supporting member 18, the steering column 12 rotates (in anticlockwise direction in the drawing) with the first steering column supporting member 17 as center, whereby the steering wheel 14 moves upwardly and thus the quantity of rearward movement of the steering wheel 14 can be reduced as much as possible.

At the collision state as stated above, a driver will bump his head against the steering wheel due to reaction of the impulse. In order to prevent such trouble, in the case of this embodiment the airbag device 102 is provided at the central part (boss part) of the steering wheel 14. In this case, when the steering wheel 14 received the impact from the gear box 16 side, it moves downwardly but moves upwardly when it receives the impact from the vacuum doubling device 9. Therefore, when a driver bumps his head against the inflated airbag 102a of the airbag device 102 on the steering wheel 14, the steering wheel 14 is in almost the same position as before the collision. Thus, the position at which a driver will bump his head against the airbag 102a on the steering wheel 14 is the central part of the airbag 102a corresponding to the central part of the steering wheel 14. This will display the preventative effect by the airbag 102a more effectively.

Fig.7-Fig.11 show the steering assembly supporting construction with respect to the second embodiment of the present invention. In the case of this second embodiment, a second steering column supporting member 30 which connects the lower part of the steering column 12 to the pedal bracket 25 is provided with a support plate 31 which is mounted between a pair of right and left arms 25a formed at the pedal bracket 25 and supports the steering column 12 from underside, a pair of clamp members 32 with one end 32b thereof fixed to the support plate 31 by hinge for clamping the steering column 12 on the support plate 31 and a connecting pin 33 which is passed through the other ends or hinge portions 32a of both clamp members 32 for connecting the both. By releasing the connected state of both clamp members by drawing out the connecting pin 33, connection of the steering column 12 with the pedal bracket 25 is released.

A releasing means for releasing the steering column 12 from the connected state by drawing out the connecting pin 33 in the second steering column supporting member 30 is composed of a wire. The wire 34 is laid over the engine room 2 and the driver's compartment 3 as it is supported by rollers 35. One end portion 34a of the wire 34 on the engine room side is connected to the upper part of the engine 7 and the other end portion 34b on the driver's compartment side is connected to the connecting pin 33 of the second steering column supporting member 30 from the side of the first steering column supporting member 17, namely, from the rear. At a car crash, prior to the engine 7 and the transmission 8 striking against the vacuum multiplying device 9 or the gear box 16 on the dash lower panel 1 side, the wire 34 detects the collision by pulling force caused by movement of the engine 7 toward the driver's compartment 3 side and the steering column 12 is released from the connected state by drawing out of the connecting pin 33 in the second steering column supporting member 30. Other compositions of the steering assembly supporting construction are the same as in the case of the first embodiment. Like reference numerals are given to like members and explanation of them is omitted.

Fig.12-Fig.15 show the steering assembly supporting construction with respect to the third embodiment of the present invention. In the case of this embodiment, a second steering column supporting member 40 which connects the lower part of the steering column 12 to the pedal bracket 25 is provided with a bracket 41 on the column side fitted to the steering column 12 and a connecting rod 42 which is mounted between a pair of right and left arm portions 41a projecting toward the side of the pedal bracket 25, extending in the car width direction crossing the axial line of the steering column 12 at right angles. A pair of receiving members 25b which support the connecting rod 42 from the lower side are formed integrally with the pedal bracket 25 as composing elements of the steering column supporting member 40. A restricting member 43 which restricts the connecting rod 42 supported on the receiving members 25b from the upper side is provided at the pedal bracket 25 swingably by a support axis 44. The restricting member 43 is forced to restrict the connecting rod 42 on the receiving members 25b at all times by a spring 45.

Connected to the restricting member 43 is one end of a link member 46 as a releasing means. The other end of the link member 46 extends nearly to the rear side of the engine 7, passing through the dash lower panel 1. At a car crash, before the engine 7 and the transmission 8 strike against the vacuum multiplying device 9 or the gear box 16 on the dash lower panel 1 side, the link member 46 detects the collision by the rear movement of the engine 7 to the driver's compartment 3 and the restricted condition of a connected rod 42 on the receiving members 25b of the pedal bracket 25 is released by rotating the restricting member 43 in the restriction releasing direction (in clockwise direction in Fig. 12) around the support axis 44 against the force of a spring 45 and thus the steering column 12 is released from the connection with the pedal bracket 25.

Fig.16-Fig.21 show the steering assembly supporting construction with respect to the fourth embodiment of the present invention. In the case of this embodiment, a second steering column supporting member 50 which connects the lower part of the steering column 12 to the pedal bracket 25 is provided, similarly to the case of the second embodiment, with a support plate 51 which is mounted between arm portions 25a of the pedal bracket 25 and supports the steering column 12 from the underside, a pair of clamp members 52 with one end 52b thereof fixed to the support plate 51 by hinge for clamping the steering column 12 on the supporting plate 51 and a connecting pin 53 for connecting hinge portions 52a at the other ends of both clamp members 52.

A releasing means 54 is provided with a support axis 55 which is mounted and supported between right and left walls 25b of the pedal bracket 25 and an engaging rod 56 which projects from the support axis 55 and engages with the hinge pin 53 of the second steering column supporting member 50. Connected to one end of the support axis 55 via a lever member 58 is a globular weight member 57 which is rotated integrally with the support axis 55. On the other hand, a binding nut 59 for checking the rotation of the support axis 55 is screwed and bound to a screw part 55a fromed at the support axis 55 by the required binding force. At a car crash, the weight member 57 and the support axis 55 turn about the axis of the latter by the force of inertia acting on the weight member 57 against the binding force of the biding nut 59, whereby the engaging rod 56 is rotated and the hinge pin 53 of the second steering column supporting member 50 is drawn out. Thus, the connected state of the steering column 12 is released.

In either case of the second, third and fourth embodiments at a car crash, before the engine 7 and the transmission 8 strikes against the vacuum multiplying device 9 or the gear box 16, the connected state of the steering column 12 by the second steering column supporting member 30, 40, 50 is released accurately by the releasing means 34, 46, 54. Then the steering column 12 rotates, with the first steering column supporting member 17 as center, by the impact from the side of the gear box 16 against which the transmission 8 strikes and the steering wheel 14 moves downwardly but soon moves upwardly with the rotation of the steering column 12 caused by the impact from the side of the vacuum multiplying device 9. This can restrict as far as possible the quantity of rearward movement of the steering wheel 14 and also can display effectively the protective effect (protecting a driver from bumping his head against the steering wheel 14).

The present invention is not limited to the first, second, third and fourth embodiments mentioned above but includes other various modifications. For example, in each of the above embodiments the present invention is applied to the case of steering assembly supporting construction of a motor vehicle provided with the airbag device 102 at the steering wheel 14 but is applicable to the case of steering assembly supporting construction of a motor vehicle having no airbag device 102. In this case, supporting that a driver bumps his head against the steering wheel 14 by the reaction of the collision, a handle part with a circumferential edge of low rigidity is better than a central boss part of high rigidity as a portion against which his head will strike. Therefore, in the case of the first embodiment, the releasing timing at which the connected state of the steering column 12 in the second steering column supporting member 18 is released is set at the collision state immediately before the engine 7 strikes against the vacuum multiplying device 9 after the transmission 8 struck against the gear box 16 so that the steering wheel 14 moves only upwardly by the rotation of the steering column 12.

In each of the above embodiments, the second steering column supporting members 18, 30, 40, 50 which connect the lower part of the steering column 12 to the car body side member (pedal bracket 25) and makes the connection releasable and the releasing means 26, 34, 46, 54 which release the connected state of the steering column by the steering column supporting members 18, 30, 40, 50 are composed mechanically but may be composed electrically, for example, while the steering column is connected to the car body side members by means of an electromagnet, the collision state is detected by a sensor, such as a stain gauge, and upon receipt of a signal from the sensor, electric charge to the electromagnet is cut off to release the connected state of the steering column.

## Claims

1. A steering assembly supporting construction of a motor vehicle comprising a steering column (12) which is arranged in upwardly sloped state and supports a steering shaft (13) rotatably, which steering shaft transmits turning force of a steering wheel (14) to a bear box (16),
a first steering column supporting member (17) which is fixed to a car body and supports an upper part of the steering column (12) at a fixed position,
a second steering column supporting member (18, 30, 40, 50) which connects a lower part of the steering column (12) to a member (25) on the car body side and makes the connected state of the steering column (12) releasable,
the steering shaft comprises a main steering shaft (12) and a connecting shaft (15) for connecting said main steering shaft with a gear box (16) wherein the connecting shaft (15) inclines downwardly in relation to the main steering shaft (12),
a joint between the main steering shaft (12) and the connecting shaft (15) and a joint between the connecting shaft (15) and the gear box (16) are pivoted by a universal joint (29a, 29b) characterized by
releasing means (21, 21a, 24, 26; 32, 33, 34; 43, 44, 45, 46; 52, 53, 54, 55) which detects a predetermined collision state at a car crash and initiates release of said second steering column supporting member (18, 30, 40, 50) before the gear box (16) at the lower end of the steering column (12) is affected by the collision.

2. A steering assembly supporting construction as defined in Claim 1, wherein the collision state is detected by the movement of an auxiliary machine member (7) arranged in an engine room (2).

3. A steering assembly supporting construction as defined in Claim 2, wherein the auxiliary machine member is an engine (7).

4. A steering assembly supporting construction as defined in Claim 2, wherein the releasing means (26) is connected at one end thereof to the auxiliary machine member (7) and at the other end thereof to the second steering column supporting member (50).

5. A steering assembly supporting construction as defined in Claim 1, wherein the releasing means (54) is connected to a weight member (57) which is so designed that at a car crash the weight member (57) moves by the inertia and releases the connected state of the steering column (12) by the second steering column supporting member (18).

6. A steering assembly supporting construction as defined in Claim 1, wherein the gear box has a pinion rod (16b) projecting upwardly from the gear box proper (16a) and the connecting shaft (15) is connected to an upper end of the pinion rod (16b).

7. A steering assembly supporting construction as defined in Claim 1, wherein the first steering column supporting member (17) extends in car width direction and both ends thereof are connected to a cowl side.

8. A steering assembly supporting construction as defined in Claim 1, wherein the second steering column supporting member (18) connects a bracket (25) connected to a cowl box (6) extending in car width direction with the steering column (12).

9. A steering assembly supporting construction as defined in Claim 1, wherein it is so constructed that the second steering column supporting member (18) is provided with a sliding member (21) mounted slidably at the outer circumference of the steering column (12), the steering column (12) is connected to a member on the car body side by fitting an engaging part (21a) of the sliding member (21) to a holding part (24a) arranged at a member (24) on the car body side and the connected state of the steering column (12) is released by releasing the fitted state of the engaging part (21a).

10. A steering assembly supporting construction as defined in Claim 1, wherein it is so constructed that the second steering column supporting member (30) is provided with a pair of clamp members (32) which are supported rotatably at one end thereof to a member on the car body side and clamp the steering column (12) and a connecting pin (33) which is passed through the other ends of both clamp members (32) for interconnecting the both, and the connected state of the steering column (12) is released by releasing the interconnected state of both clamp members (32).

11. A steering assembly supporting construction as defined in Claim 1, wherein the second steering column supporting member (40) is provided with a connecting rod (42) arranged on the steering column (12) in car width direction and at a right angle to the axis of the steering column (12), a receiving member (25b) arranged at a member on the car body side and supporting the connecting rod (42) from the underside and a restricting member (43) which is arranged swingably at a member on the car body side and restricts the connecting rod (42) supported on the receiving member (25b) from the upper side.

12. A steering assembly supporting construction as defined in Claim 1, wherein it is so constructed that the second steering column supporting member (50) is provided with a pair of clamp members (52) which are supported rotatably at one end thereof to a member on the car body side and clamp the steering column (12) and a connecting pin (53) which is passed through the other ends of both clamp members (52) for interconnecting the both, the releasing means is provided with a moving member (58) which is moved by the inertia movement of a weight member (57) at a car crash and the connected state of the steering column is released by drawing out the connecting pin (53) in the second steering column supporting member (50) by the movement of the moving member.

13. A steering assembly supporting construction as defined in Claim 1, wherein the releasing means is a link member (26) with one end thereof positioned close to the rear surface of an auxiliary machine member (7) arranged in the engine room (2) and the other thereof contacted the sliding member (21) of the second steering column supporting member (18), said link member (26) retreats with the movement of the auxiliary machine member (7) at a car crash, whereby the sliding member is caused to slide and the fitted state of the engaging part thereof is released.

14. A steering assembly supporting construction as defined in Claim 10, wherein the releasing member is a wire (34) with one end thereof connected to an auxialiary machine member (7) arranged in the engine room (2) from above and the other end thereof connected to the connecting pin (38) of the second steering column supporting member from the rear, said wire (34) being so arranged that at a car crash it is pulled by the movement of an auxiliary machine member (7) and draws out the connecting pin (33).

15. A steering assembly supporting construction as defined in Claim 11, wherein the releasing member is a link member (46) with one end thereof positioned close to the rear surface of an auxiliary machine member (7) arranged in the engine room (2) and the other end thereof connected to a restricting member (43) of the second steering column supporting member (40), said link member retreats with the movement of the auxiliary machine member (7) at a car crash and rotates the restricting member (43) to release the restricted state of the connecting rod (42) on the receiving member (25b).

## Patentansprüche

1. Lenkanordnungshalteaufbau eines Kraftfahrzeuges mit einer Lenksäule (12), die sich schräg nach oben erstreckt und drehbar eine Lenkwelle (13) hält, wobei die Lenkwelle die Drehkraft eines Lenkrades (14) auf ein Getriebegehäuse (16) überträgt,
einem ersten Lenksäulenhalteelement (17), welches an der Fahrzeugkarosserie befestigt ist und einen oberen Teil der Lenksäule (12) in einer vorbestimmten Position hält, und
einem zweiten Lenksäulenhalteelement (18, 30, 40, 50), welches einen unteren Teil der Lenksäule (12) an einem Element (25) der Fahrzeugkarosserie hält und eine lösbare Verbindung der Lenksäule (12) darstellt,
wobei die Lenkwelle eine Hauptlenkwelle (12) sowie eine Verbindungswelle (15) zur Verbindung der Hauptlenkwelle mit dem Getriebegehäuse (16) umfaßt, wobei die Verbindungswelle (15) in bezug auf die Hauptlenkwelle (12) nach unten geneigt ist,
und die Verbindung zwischen der Hauptlenkwelle (12) und der Verbindungswelle (15) sowie die Verbindung zwischen der Verbindungswelle (15) und dem Getriebegehäuse (16) durch ein Kreuzgelenk (29a, 29b) gebildet werden, gekennzeichnet durch
eine Freigabeeinrichtung (21, 21a, 24, 26; 32, 33, 34; 43, 44, 45, 46; 52, 53, 54, 55), die einen vorbestimmten Kollisionsstatus bei einem Unfall ermittelt und die Freigabe des zweiten Lenksäulenhalteelementes (18,30, 40, 50) einleitet, bevor das Getriebegehäuse (16) am unteren Ende der Lenksäule (12) durch die Kollision beeinflußt wird.

2. Lenkanordnungshalteaufbau gemäß Anspruch 1, bei welchem der Kollisionsstatus ermittelt wird durch die Bewegung eines Hilfsmaschinenelementes (7), welches im Motorraum (2) angeordnet ist.

3. Lenkanordnugnshalteaufbau nach Anspruch 2, bei welchem das Hilfsmaschinenelement ein Motor (7) ist.

4. Lenkanordnugnshalteaufbau nach Anspruch 2, bei welchem die Freigabeeinrichtung (26) mit ihrem einen Ende an das Hilfsmaschinenelement (7) angeschlossen ist, während das andere Ende an das zweite Lenksäulenhalteelement (50) angeschlossen ist.

5. Lenkanordnungshalteaufbau nach Anspruch 1, bei welchem die Freigabeeinrichtung (54) an ein Gewichtelement (57) angeschlossen ist, welches derart ausgelegt ist, daß bei einem Unfall das Gewichtselement (57) durch die Trägheit bewegt wird und den Verbindungsstatus der Lenksäule (12) durch das zweite Lenksäulenhalteelement (18) freigibt.

6. Lenkanordnugnshalteaufbau nach Anspruch 1, bei welchem das Getriebegehäuse eine Ritzelwelle (16b) trägt, die von dem Getriebegehäuse (16a) nach oben vorragt und die Verbindungswelle (15) an das obere Ende der Ritzelwelle (16b) angeschlossen ist.

7. Lenkanordnungshalteaufbau nach Anspruch 1, bei welchem sich ein erstes Lenksäulenhalteelement (17) in Querrichtung des Fahrzeuges erstreckt und mit beiden Enden an eine Haubenkammer angeschlossen ist.

8. Lenkanordnungshalteaufbau nach Anspruch 1, bei welchem das zweite Lenksäulenhalteelement (18) an eine Klammer (25) angeschlossen ist, die mit einer Haubenkammer (6) in Verbindung steht, welche sich in Querrichtung zur Lenksäule (12) erstreckt.

9. Lenkanordnungshalteaufbau nach Anspruch 1, der derart aufgebaut ist, daß das zweite Lenksäulenhalteelement (18) mit einem Gleitelement (21) versehen ist, welches verschiebbar auf dem äußeren Umfang der Lenksäule (12) montiert ist, wobei die Lenksäule (12) an ein Element der Fahrzeugkarosserie durch die Befestigung eines Eingriffsteils (21a) des Gleitelementes (21) an einen Halteteil (24a), der an einem Element (24) der Fahrzeugkarosserie angeordnet ist, angeschlossen ist, und der Verbindungsstatus der Lenksäule (12) freigegeben wird durch die Freigabe des Befestigungsstatus des Eingriffsteiles (21a).

10. Lenkanordnungshalteaufbau nach Anspruch 1, der derart aufgebaut ist, daß das zweite Lenksäulenhalteelement (30) mit einem Paar von Klemmelementen (32) versehen ist, die drehbar mit einem Ende an einem Element der Fahrzeugkarosserie gehalten sind und die Lenksäule (12) einklemmen, und ein Verbindungsstift (33) die anderen Enden beider Klemmelemente (32)zur Verbindung der beiden durchgreift, wobei der Verbindungsstatus der Lenksäule (12) freigegeben wird durch die Freigabe des Verbindungsstatus beider Klemmelemente (32).

11. Lenkanordnungshalteaufbau nach Anspruch 1, bei welchem das zweite Lenksäulenhalteelement (40) mit einem Verbindungsstab (42) versehen ist, der an der Lenksäule (12) in Querrichtung des Fahrzeuges und in einem rechten Winkel zur Achse der Lenksäule (12) angeordnet ist, wobei ein Aufnahmeelement (25b) an einem Element der Fahrzeugkarosserie angeordnet ist und den Verbindungsstab (42) von der Unterseite abstützt, während ein Halteelement (43), welches schwenkbar an einem Element der Fahrzeugkarosserie befestigt ist, den Verbindungsstab (42), der von dem Aufnahmeelement (25b) abgestützt ist, von der Oberseite hält.

12. Lenkanordnungshalteaufbau gemäß Anpsruch 1, der derart aufgebaut ist, daß das zweite Lenksäulenhalteelement (50) mit einem Paar von Klemmelementen (52) versehen ist, die drehbar mit ihrem einen Ende an einem Element der Fahrzeugkarosserie gehalten sind und die Lenksäule (12) einklemmen, während ein Verbindungsstift (53) die anderen Enden beider Klemmelemente (52) zu deren Verbindung durchgreift, wobei die Freigabeeinrichtung mit einem Verschiebeelement (58) versehen ist, welches durch die Trägheitsbewegung eines Gewichtselementes (57) bei einem Unfall verschoben wird und der Verbindungsstatus der Lenksäule freigegeben wird durch das Herausziehen des Verbindungsstiftes (53) des zweiten Lenksäulenhalteelementes (50) durch die Bewegung des Bewegungselementes.

13. Lenkanordnungshalteaufbau gemäß Anspruch 1, bei welchem die Freigabeeinrichtung ein Hebelelement (26) ist, dessen eines Ende nahe an der rückseitigen Oberfläche eines Hilfsmaschinenelementes (7) innerhalb des Maschinenraumes (2) angeordnet ist und sein anderes Ende in Kontakt mit dem Gleitelement (21) des zweiten Lenksäulenhalteelementes (18) steht, wobei das Hebelelement (26) sich mit der Bewegung des Hilfsmaschinenelementes (7) bei einem Unfall zurückzieht, wodurch das Gleitelement zum Gleiten veranlaßt wird und der Befestigungsstatus seines Eingriffsteiles freigegeben wird.

14. Lenkanordnungshalteaufbau gemäß Anspruch 10, bei welchem das Freigabeelement ein Draht (34) ist, dessen eines Ende an das Hilfsmaschinenelement (7) innerhalb des Motorraumes (2) von oben angeschlossen ist, und dessen anderes Ende an einem Verbindungsstift (38) des zweiten Lenksäulenhalteelementes von hinten befestigt ist, wobei der Draht (34) derart angeordnet ist, daß er bei einem Unfall durch die Bewegung des Hilfsmaschinenelementes (7) angezogen wird, und den Verbindungsstift 833) herauszieht.

15. Lenkanordnungshalteaufbau gemäß Anspruch 11, bei welchem das Freigabeelement ein Hebelelement (46) ist, dessen eines Ende sich in der Nähe der hinteren Oberfläche des Hilfsmaschinenelementes (7), welches innerhalb des Motorraumes (2) angeordnet ist, befindet, und dessen anderes Ende mit einem Halteelement (43) des zweiten Lenksäulenhalteelementes (40) verbunden ist, wobei das Hebelelement mit der Bewegung des Hilfsmaschinenelementes (7) bei einem Unfall zurückgezogen wird und das Halteelement (43) dreht zur Freigabe des Haltezustandes des Verbindungsstabes (42) am Aufnahmeelement (25b).

## Revendications

1. Une structure de support d'ensemble de direction pour un véhicule à moteur comprenant une colonne de direction (12) qui est disposée dans un état incliné vers le haut et qui supporte à rotation un arbre de direction (13) qui transmet la force de rotation d'un volant de direction (14) à un mécanisme de direction (16) ; un premier organe de support de direction (17) qui est fixé à une caisse de véhicule et qui supporte une partie supérieure de la colonne de direction (12) dans une position fixe ; un second organe de support de colonne de direction (18, 30, 40, 50) qui relie une partie inférieure de la colonne de direction (12) à un organe (25) sur la caisse du véhicule et qui rend libérable l'état de liaison de la colonne de direction (12) ; et dans lequel l'arbre de direction comporte un arbre de direction principal (12) et un arbre de liaison (15) pour relier ledit arbre de direction principal à un mécanisme de direction (16) dans lequel l'arbre de liaison (15) est incliné vers le bas par rapport à l'arbre de direction principal (12) ; un joint de transmission entre l'arbre de direction principal (12) et l'arbre de liaison (15) et un joint de transmission entre l'arbre de liaison (15) et le mécanisme de direction (16) qui sont articulés par un joint universel (29a, 29b), caractérisé par des moyens de libération (21, 21a, 24, 26 ; 32, 33, 34 ; 43, 44, 45, 46 ; 52, 53, 54, 55) qui détectent un état de collision prédéterminé en cas d'écrasement du véhicule dû à un choc et qui déclenche la libération dudit second organe de support de la colonne de direction (18, 30, 40, 50) avant que le mécanisme de direction (16) à l'extrémité inférieure de la colonne de direction (12) ne soit affecté par la collision.

2. Une structure de support d'ensemble de direction telle que définie à la revendication 1, dans laquelle l'état de collision est détecté par le déplacement d'un organe mécanique auxiliaire (7) disposé dans un compartiment moteur (2).

3. Une structure de support d'ensemble de direction telle que définie à la revendication 2 dans laquelle l'organe mécanique auxiliaire est un moteur (7).

4. Une structure de support d'ensemble de direction telle que définie à la revendication 2, dans laquelle les moyen de libération (26) est relié à une de ses extrémités à l'organe mécanique auxiliaire (7) et à son autre extrémité au second organe de support de colonne de direction (50).

5. Une structure de support d'ensemble de direction telle que définie à la revendication 1, dans laquelle le moyen de libération (54) est relié à un organe de contrepoids (57) qui est prévu de telle façon qu'en cas d'écrasement du véhicule sur un obstacle, cet organe de contrepoids (57) se déplace sous l'effet de l'inertie et libère l'état de liaison de la colonne de direction (12) avec le second organe de support de colonne de direction (18).

6. Une structure de support d'ensemble de direction telle que définie à la revendication 1, dans laquelle le mécanisme de direction comporte une tige de pignon (16b) faisant saillie vers le haut à partir du boîtier de direction proprement dit (16a) et dans laquelle l'arbre de liaison (15) est relié à une extrémité supérieure de la tige de pignon (16b).

7. Une structure de support d'ensemble de direction telle que définie à la revendication 1, dans laquelle le premier organe de support de direction (17) s'étend dans la direction de la largeur du véhicule et ses deux extrémités sont reliées à une face de capot.

8. Une structure de support d'ensemble de direction telle que définie à la revendication 1, dans laquelle le second organe de support de colonne de direction (18) relie un support ou console (25) reliés à un boîtier de capot (6) s'étendant dans la direction de la largeur du véhicule, à la colonne de direction (12).

9. Une structure de support d'ensemble de direction telle que définie à la revendication 1, qui est réalisée de telle façon que le second organe de support de colonne de direction (18) soit muni d'un organe coulissant (21) monté coulissant sur la circonférence extérieure de la colonne de direction (12), que la colonne de direction (12) soit reliée à un organe sur la caisse du véhicule par montage d'une partie d'engagement (21a) de l'organe coulissant (21) dans une partie de support (24a) disposé sur un organe (24) sur la caisse du véhicule et dans laquelle l'état de liaison de la colonne de direction (12) est libéré par libération de l'état engagé de la partie d'engagement (21a).

10. Une structure de support d'ensemble de direction telle que définie à la revendication 1, qui est réalisée de telle façon que le second organe de support de colonne de direction (30) est muni d'une paire d'organes de pinces (32) qui sont supportées à rotation à l'une de leurs extrémités sur un organe de la caisse du véhicule et qui viennent pincer la colonne de direction (12) et d'une tige de liaison (33) qui traverse les autres extrémités des deux organes de pinces (32) pour relier ces deux organes et que l'état de liaison de la colonne de direction (12) soit libéré par libération de l'état d'interconnexion des deux organes de pinces (32).

11. Une structure de support d'ensemble de direction telle que définie à la revendication 1, dans laquelle le second organe de support de colonne de direction (40) est muni d'une tige de liaison (42) disposé sur la colonne de direction (12) dans le sens de la largeur du véhicule et à angle droit par rapport à l'axe de la colonne de direction (12), et dans lequel un organe de réception (25b) disposé comme un organe sur la caisse du véhicule qui supporte la tige de liaison (42) à partir de la face inférieure et un organe de retenue (43) qui est disposé pivotant sur un organe de la caisse du véhicule et qui retient la tige de liaison (42) supportée sur l'organe de réception (25b) à partir de la face supérieure.

12. Une structure de support d'ensemble de direction telle que définie à la revendication 1, qui est réalisée de telle façon que le second organe de support de colonne de direction (50) est muni d'une paire d'organes de pinces (52) qui sont supportée à rotation à l'une de leurs extrémités sur un organe de la caisse du véhicule et qui viennent pincer la colonne de direction (12) et une tige de liaison (53) qui traverse les autres extrémités des deux organes de pinces (52) pour interconnecter ces deux éléments, dans lequel le moyen de libération est prévu avec un organe mobile (58) qui est déplacé par le déplacement sous l'effet de l'inertie d'un organe de contrepoids (57) en cas d'écrasement du véhicule sur un obstacle et dans lequel l'état de liaison de la colonne de direction est libéré par traction de la tige d liaison (53) dans le second organe de support de colonne de direction (50) par le déplacement de l'organe mobile.

13. Une structure de support d'ensemble de direction telle que définie à la revendication 1, dans laquelle le moyen de libération est constitué d'un organe de biellette (26) dont une extrémité est disposée à proximité de la surface arrière d'un organe mécanique auxiliaire (7) disposé dans le compartiment moteur (2) et dont l'autre extrémité est en contact avec l'organe coulissant (21) du second organe de support de colonne de direction (18), ledit organe de biellette (26) se retirant en même temps que les déplacements de l'organe mécanique auxiliaire (7) en cas d'écrasement du véhicule sur un obstacle, de telle manière que l'organe coulissant soit obligé de coulisser et que l'état d'engagement de la partie d'engagement soit supprimé.

14. Une structure de support d'ensemble de direction telle que définie à la revendication 10, dans laquelle, l'organe de libération est un fil (34) dont une extrémité est reliée à un organe mécanique auxiliaire (7) disposé dans le compartiment moteur (7) par le dessus et dont l'autre extrémité est reliée à la tige de liaison (38) du second organe de support de colonne de direction à partir de l'arrière, ledit fil (34) étant disposé de telle façon qu'en cas d'écrasement du véhicule sur un obstacle, il soit tiré par le déplacement d'un organe mécanique auxiliaire (7) et qu'il viennent tirer la tige de liaison (33).

15. Une structure de support d'ensemble de direction telle que définie à la revendication 11, dans laquelle l'organe de libération est un organe de biellette (36) dont une extrémité est placée à proximité de la surface arrière d'un organe mécanique auxiliaire (7) disposé dans le compartiment moteur (2) et dont l'autre extrémité est reliée à un organe de retenue (43) du second organe de support de colonne de direction (40), ledit organe de biellette effectue un retrait en même temps que le déplacement de l'organe mécanique auxiliaire (7) en cas d'écrasement du véhicule sur un obstacle et fait tourner l'organe de retenue (43) pour libérer l'état de retenue de la tige de liaison (42) sur l'organe de réception (25b).
